# EUROPÄISCHE PATENTSCHRIFT

(11) **EP 4 038 344 B1**
(45) Veröffentlichungstag und Bekanntmachung des Hinweises auf die Patenterteilung: **27.12.2023**
(21) Anmeldenummer: 20785446.4
(22) Anmeldetag: 23.09.2020
(51) Int. Cl.: G01C 7/04, G01C 13/00, B60F 3/00, B60W 30/08, B60W 40/06, B60W 50/14, G08G 1/16, B63C 7/26, B63C 11/48, B63C 11/52, B63G 8/00

(54) **ERFASSUNGSVORRICHTUNG FÜR EIN KRAFTFAHRZEUG ZUM ERFASSEN VON UNTER EINER WASSEROBERFLÄCHE LIEGENDEN HINDERNISSEN**
CAPTURE APPARATUS FOR A MOTOR VEHICLE FOR CAPTURING OBSTACLES BELOW A WATER SURFACE
APPAREIL DE CAPTURE POUR UN VÉHICULE MOTORISÉ POUR LA CAPTURE D'OBSTACLES SOUS UNE SURFACE D'EAU

(30) Priorität: 30.09.2019 DE 102019006804
(43) Veröffentlichungstag der Anmeldung: 10.08.2022
(73) Patentinhaber: MAN Truck & Bus SE, 80995 München (DE)
(72) Erfinder: KUTTENREICH, Fabian, 80995 München (DE); KRAUS, Sven, 80995 München (DE)
(74) Vertreter: v. Bezold & Partner Patentanwälte - PartG mbB
(86) Internationale Anmeldenummer: PCT/EP2020/076507
(87) Internationale Veröffentlichungsnummer: WO 2021/063761

(56) Entgegenhaltungen:
- CN-B- 103 158 797
- DE-A1-102012 004 198
- DE-A1-102018 112 269

## Beschreibung

Die Erfindung betrifft eine Erfassungsvorrichtung zum Anordnen an ein Kraftfahrzeug, vorzugsweise zum Anordnen an eine Kraftfahrzeugfront des Kraftfahrzeugs, vorzugsweise eines Nutzfahrzeugs, mit zumindest einer Halterungskonstruktion zur Montage an das Kraftfahrzeug. Die zumindest eine Halterungskonstruktion umfasst zumindest ein Erfassungselement, um eine in Fahrtrichtung vor dem Kraftfahrzeug unter einer Wasseroberfläche liegende Fahrbahntopografie zu erfassen, z. B. um eine Wassertiefe (insbesondere Watttiefe) und/oder insbesondere abrupte Erhebungen und/oder abrupte Vertiefungen umfassende Hindernisse zu erfassen.

Zum Stand der Technik kann zunächst auf die DE 10 2018 112 269 A1 verwiesen werden, welche eine Vorrichtung offenbart, umfassend einen Speicher, der in der Lage ist, einen oder mehrere Sätze Anweisungen und ein räumliches Modell eines Fahrzeugs zu speichern, und einen Prozessor, der zum Ausführen des einen oder der mehreren Sätze Anweisungen, die im Speicher gespeichert sind, gekoppelt ist, sodass der Prozessor, wenn er den einen oder die mehreren Sätze Anweisungen ausführt, Operationen durchführt, umfassend Bestimmen der einen oder mehreren Tiefen und eines Bodenprofils eines Gewässers, Kalkulieren der einen oder mehreren kritischen Bahnen des Fahrzeugs auf Grundlage des Bodenprofils des Gewässers und des räumlichen Modells des Fahrzeugs und Durchführen eines oder mehrerer von: Bestimmen, ob es sicher ist, dass das Fahrzeug das Gewässer durchwatet, auf Grundlage der einen oder mehreren Tiefen des Gewässers und der einen oder mehreren kritischen Bahnen; Bestimmen einer Watstrecke, über welche das Fahrzeug in der Lage ist, das Gewässer sicher zu durchwaten, und einer Watgeschwindigkeit, mit der das Fahrzeug in der Lage ist, das Gewässer über die Watstrecke sicher zu durchwaten, und Bestimmen einer alternativen Strecke, über die das Fahrzeug in der Lage ist, das Gewässer zu umfahren. Zum Stand der Technik kann ferner auf die CN 103 158 797 B und DE 10 2012 004 198 A1 verwiesen werden.

Einsatzfahrzeuge für Katastrophengebiete, insbesondere zum Einsatz in Überschwemmungsgebieten sind im Stand der Technik in den unterschiedlichsten Ausführungsformen bekannt.

Bei Überschwemmungen müssen Einsatzfahrzeuge häufig durch tiefes Wasser fahren (waten). In Fahrtrichtung vor den Einsatzfahrzeugen unter einer Wasseroberfläche liegende Hindernisse (z. B. Poller, Trümmer, Bordsteine, Treibgut, durch weggeschwemmte Gullideckel offenliegende Kanalschächte etc.) sind für den Fahrzeugführer durch das in der Regel trübe Wasser meist nicht erkennbar und stellen deshalb für die Einsatzfahrzeuge eine Gefahrenquelle dar.

Eine Aufgabe der Erfindung ist es, eine Möglichkeit zu schaffen, mittels der die Sicherheit von in Überschwemmungsgebieten eingesetzten Kraftfahrzeugen erhöht werden kann.

Diese Aufgabe kann mit den Merkmalen des Hauptanspruchs gelöst werden. Vorteilhafte Weiterbildungen sind in den Unteransprüchen offenbart oder ergeben sich aus der folgenden Beschreibung bevorzugter Ausführungsformen der Erfindung.

Die Erfindung betrifft eine Erfassungsvorrichtung, insbesondere eine Abtastvorrichtung, zum Anordnen an ein Kraftfahrzeug, vorzugsweise zum Anordnen an eine Kraftfahrzeugfront eines Kraftfahrzeugs, vorzugsweise eines Nutz- oder Einsatzfahrzeugs, mit zumindest einer Halterungskonstruktion zur Montage an der Kraftfahrzeugfront.

Die Erfassungsvorrichtung zeichnet sich insbesondere dadurch aus, dass die zumindest eine Halterungskonstruktion zumindest ein Erfassungselement (insbesondere Abtastelement) aufweist, um eine (z. B. bis maximal 4m, bis maximal 3,5m oder bis maximal 3m) in Fahrtrichtung vor dem Kraftfahrzeug unter einer Wasseroberfläche liegende Fahrbahntopografie zu erfassen (insbesondere abzutasten), z. B. so dass vorzugsweise Hindernisse und/oder eine (insbesondere maximale) Wassertiefe erfasst werden können.

Es ist möglich, dass das zumindest eine Erfassungselement ausgebildet ist, um auf der Fahrbahntopografie (insbesondere kontaktbasiert) abzurollen und/oder um über die Hindernisse (insbesondere kontaktbasiert) abzurollen, z. B. um die Hindernisse (insbesondere kontaktbasiert) zu überklettern.

Das Erfassungselement ist vorzugsweise ausgebildet, um die Fahrbahntopografie mittels Bodenkontakts zu erfassen und somit zweckmäßig abzutasten.

Die Fahrbahntopografie kann z. B. (insbesondere abrupte) Hindernisse umfassen.

Die Hindernisse können z. B. Vertiefungen (z. B. durch weggeschwemmte Gullideckel offenliegende Kanalschächte, Bordsteinkanten etc.) und/oder Erhebungen (z. B. Poller, Trümmer, Geröll, Bordsteinkanten, Treibgut etc.) umfassen.

Das zumindest eine Erfassungselement umfasst erfindungsgemäß ein Abtastrad und/oder eine drehbare Abtastkugel.

Das zumindest eine Erfassungselement kann z. B. ein vorzugsweise drehbares Abtastrad umfassen, vorzugsweise ein drehbares Sternrad oder ein zweckmäßig drehbares Erfassungsrad umfassen.

Das Sternrad kann z. B. zumindest drei Abtasträder (insbesondere zumindest drei Satelliten-Abtasträder) umfassen.

Das Sternrad kann z. B. zumindest drei zweckmäßig drehbare Abtastarme mit jeweils einem Abtastrad umfassen. Die Abtastarme können z. B. eine zweckmäßig zentrale Drehkonstruktion für die Abtasträder bilden.

Das Sternrad, insbesondere die Abtasträder und/oder die Abtastarme sind vorzugsweise um eine zentrale Drehachse drehbar.

Das Sternrad kann z. B. als Abtastrevolver bezeichnet werden.

Das zumindest eine Erfassungselement kann auch ein zweckmäßig drehbares Erfassungsrad mit z. B. im Wesentlichen kreisförmiger Bodenkontaktfläche sein.

Das zumindest eine Erfassungselement kann z . B. eine drehbare Abtastkugel umfassen.

Es ist z. B. möglich, dass die Abtastkugel abschnittsweise in einem Kugelgehäuse untergebracht und/oder darin drehbar gelagert ist.

Die Abtastkugel kann vorzugsweise frei drehbar sein, um z. B. bei Kurvenfahrten im Wesentlichen keine Querkräfte aufzubauen (vorzugsweise weil sie insbesondere inhärent mit dem Kraftfahrzeug mitlenken kann) und/oder um in alle (Fahrt-) Richtungen abrollen zu können.

Es ist möglich, dass die Abtastkugel in einer Ebene (insbesondere in der Horizontalen) und/oder um alle drei Raumachsen frei abrollen kann (vorzugsweise frei drehbar ist), so dass die Abtastkugel z. B. bei Kurvenfahrten im Wesentlichen keine Querkräfte aufbaut (vorzugsweise weil sie insbesondere inhärent mit dem Kraftfahrzeug mitlenken kann).

Es ist darauf zu achten, dass die Auflagefläche der Abtastkugel vorzugsweise kleiner oder gleich der Auflagefläche der Reifen der Vorderräder des Kraftfahrzeugs ist.

Die zumindest eine Halterungskonstruktion kann z. B. zumindest einen Dämpfer zum Reduzieren eines Erfassungsimpulses umfassen, z. B. beim Erfassen der Fahrbahntopografie, insbesondere beim Erfassen eines insbesondere abrupten Hindernisses. Dadurch können Erfassungsimpulse insbesondere bei einer Kollisionen mit insbesondere massiven und/oder großen Hindernissen gedämpft und somit reduziert werden.

Das zumindest eine Erfassungselement kann vorzugsweise im Wesentlichen am distalen Ende der zumindest einen Halterungskonstruktion angeordnet sein.

Es ist möglich, dass die zumindest eine Halterungskonstruktion ein erstes (z. B. balkenförmiges) Tragelement und ein zweites (z. B. balkenförmiges) Tragelement aufweist, die mittels eines Drehgelenks miteinander verbunden sein können, z. B. um ein Auslenken des zweiten Tragelements in Abhängigkeit der Fahrbahntopografie zu ermöglichen, vorzugsweise um ein Auslenken in Auf- und Abwärtsrichtung zu ermöglichen.

Das erste Tragelement und das zweite Tragelement können z. B. eine Bügelkonstruktion und/oder Gestängekonstruktion bilden.

Es ist möglich, dass das zweite Tragelement sich vorzugsweise in Richtung des zumindest einen Erfassungselements im Wesentlichen schräg nach oben erstreckt und/oder eine zentrale Drehachse des zumindest einen Erfassungselements auf einem höheren Niveau angeordnet ist als das Drehgelenk.

Dadurch kann ein Auslenken der zumindest einen Halterungskonstruktion, insbesondere des zweiten Tragelements, beim Überklettern von Hindernissen erleichtert werden.

Die zumindest eine Halterungskonstruktion und/oder das zumindest eine Erfassungselement kann z. B. lenkbar sein, z. B. um eine im Wesentlichen senkrecht zur Drehachse verlaufende Lenkachse.

Die zumindest eine Halterungskonstruktion und/oder das zumindest eine Erfassungselement kann z. B. ausgeführt sein, um zusammen mit dem Kraftfahrzeug gelenkt werden zu können.

Dadurch kann der durch Lenkungen des Kraftfahrzeugs verursachte Verschleiß des zumindest einen Erfassungselements reduziert und/oder die Manövrierbarkeit des mit der Erfassungsvorrichtung ausgestatteten Kraftfahrzeugs verbessert werden.

Es ist möglich, dass die Erfassungsvorrichtung zumindest zwei Halterungskonstruktionen aufweist, die vorzugsweise nebeneinander angeordnet sind und/oder sich im Wesentlichen parallel zueinander erstrecken.

Es ist möglich, dass die Erfassungsvorrichtung zumindest ein Fangelement aufweist zum Erfassen von Erhebungen umfassenden Hindernissen zwischen den zumindest zwei Halterungskonstruktionen. Das Fangelement bildet somit vorzugsweise ein zusätzliches Erfassungselement für unter der Wasseroberfläche liegende Hindernisse, insbesondere Erhebungen.

Das Fangelement ist vorzugsweise ein im Wesentlichen biegeschlaffes (z. B. nachgiebiges oder flexibles) Fangelement und/oder ein Fangelement zum in Eingriff kommen mit Erhebungen umfassenden Hindernissen.

Das Fangelement kann z. B. ein Zugstrang sein, vorzugsweise eine Fangleine, ein Fangband oder eine Fangkette etc..

Das Fangelement kann z. B. die mindestens zwei Halterungskonstruktionen miteinander verbinden.

Das Fangelement kann z. B. im Wesentlichen quer zu den mindestens zwei Halterungskonstruktionen verlaufen.

Es ist möglich, dass die Erfassungsvorrichtung zumindest eine für einen Fahrzeugführer des Kraftfahrzeugs optisch erkennbare Anzeigestruktur aufweist.

Die Anzeigestruktur ist vorzugsweise ausgebildet, um in Abhängigkeit der (insbesondere mittels des zumindest einen Erfassungselements und/oder mittels des Fangelements) erfassten Fahrbahntopografie bewegt zu werden, so dass z. B. das Bewegen der Anzeigestruktur dem Fahrbahnführer Informationen über die vorausliegende Fahrbahntopografie liefern kann.

Die Anzeigestruktur ist vorzugsweise zum Herausragen aus der Wasseroberfläche ausgebildet und kann z. B. eine im Wesentlichen senkrechte Stange etc. umfassen.

Die Anzeigestruktur, insbesondere die Stange, kann durch die mittels des zumindest einen Erfassungselements und/oder mittels des Fangelements erzeugten Bewegungen ebenfalls in Bewegung versetzt werden.

Die Erfassungsvorrichtung kann z. B. eine Erfassungssensorik (z. B. einen oder mehrere Sensoren) umfassen, um die durch das zumindest eine Erfassungselement erfasste Fahrbahntopografie und/oder die durch das Fangelement erfasste Erhebung vorzugsweise elektronisch zu erfassen.

Alternativ oder ergänzend ist die Erfassungssensorik vorzugsweise ausgebildet, um die durch das zumindest eine Erfassungselement erfasste Fahrbahntopografie und/oder die durch das Fangelement erfasste Erhebung in Form eines Datenpakets an z. B. eine Steuereinrichtung (z. B. Rechnereinheit, Datenverarbeitungsvorrichtung etc.) zu übermitteln.

Die Steuereinrichtung kann z. B. ausgebildet sein, um das Kraftfahrzeug in Abhängigkeit des Datenpakets und somit insbesondere in Abhängigkeit der erfassten Fahrbahntopografie (insbesondere der Hindernisse) zu steuern, insbesondere abzubremsen.

Die Steuereinrichtung kann z. B. ausgebildet sein, um das Datenpaket und somit die erfasste Fahrbahntopografie (insbesondere die Hindernisse) an andere Kraftfahrzeuge zu übermitteln.

Die Steuereinrichtung kann z. B. ausgebildet sein, um in Abhängigkeit des Datenpakets und somit insbesondere in Abhängigkeit der erfassten Fahrbahntopografie (insbesondere der Hindernisse) eine akustische, haptische und/oder optische Warnmeldung für den Fahrzeugführer zu erzeugen.

Die Erfindung betrifft auch ein Kraftfahrzeug, z. B. ein Nutz- oder Einsatzfahrzeug, mit einer Erfassungsvorrichtung wie hierin offenbart.

Es ist möglich, dass das Kraftfahrzeug zumindest zwei vorzugsweise lenkbare Vorderräder umfasst und jeweils eine Halterungskonstruktion, die im Wesentlichen in direktem Vorlauf jeweils eines Vorderrads angeordnet ist, und z. B. zumindest eine weitere Halterungskonstruktion, die dazwischen angeordnet ist.

Die zumindest eine lenkbare Halterungskonstruktion und/oder das zumindest eine lenkbare Erfassungselement können z. B. ausgebildet sein, um zusammen mit den lenkbaren Vorderrädern einen vorzugsweise synchronen Lenkvorgang auszuführen.

Das Abtast- oder Erfassungsrad kann auch z. B. relativ breite Radkonstruktionen und somit z. B. auch Abtastwalzen etc. umfassen.

Das Kraftfahrzeug kann z. B. ein insbesondere elektronisches Display umfassen, insbesondere, um die erfasste Fahrbahntopografie anzuzeigen, vorzugsweise inklusive der z. B. durch das Fangelement erfassten Erhebungen.

Die Fahrbahntopografie kann im Kontext der Erfindung vorzugsweise eine Straßen- und/oder Geländeoberfläche umfassen, z. B. Straßen, Trümmerfelder, Gelände und/oder andere Bode- oder Terrainnoberflächen etc..

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren. Es zeigen:
- Figur 1: eine schematische Darstellung eines Kraftfahrzeugs mit einer Erfassungsvorrichtung gemäß einer Ausführungsform der Erfindung,
- Figur 2: eine schematische Darstellung einer Erfassungsvorrichtung gemäß einer anderen Ausführungsform der Erfindung;
- Figur 3: eine schematische Darstellung eines Kraftfahrzeugs mit einer Erfassungsvorrichtung gemäß einer Ausführungsform der Erfindung,
- Figur 4: eine schematische Darstellung einer Erfassungsvorrichtung gemäß einer anderen Ausführungsform der Erfindung;
- Figur 5: eine schematische Darstellung einer Erfassungsvorrichtung gemäß einer weiteren Ausführungsform der Erfindung, und
- Figur 6: eine schematische Darstellung einer Erfassungsvorrichtung gemäß einer anderen Ausführungsform der Erfindung.

Die unter Bezugnahme auf die Figuren beschriebenen bevorzugten Ausführungsformen stimmen teilweise überein, wobei ähnliche oder identische Teile mit den gleichen Bezugszeichen versehen sind und zu deren Erläuterung auch auf die Beschreibung der anderen Ausführungsformen verwiesen werden kann.

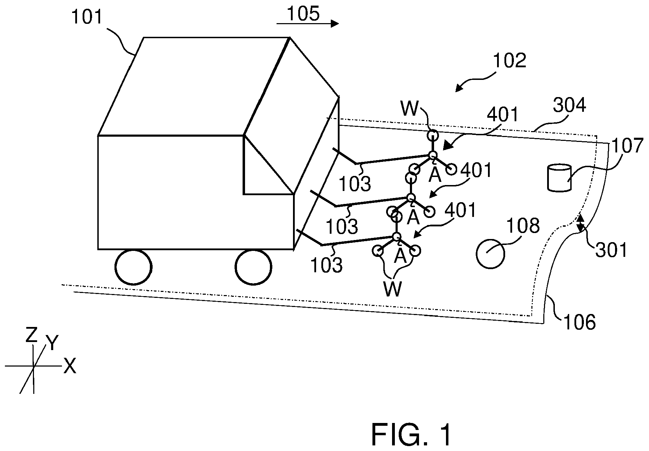

Figur 1 zeigt ein Kraftfahrzeug 101 insbesondere zum Einsatz in Überschwemmungsgebieten, insbesondere für Watfahrten. Das Kraftfahrzeug 101 muss im Einsatz somit üblicherweise durch tiefes Wasser fahren (waten).

Bezugszeichen 106 kennzeichnet eine Fahrbahntopografie mit unter einer Wasseroberfläche 304 und somit in der Regel für den Fahrzeugführer nicht sichtbaren, insbesondere abrupten, Hindernissen 107 und 108. Die Hindernisse 107 und 108 können z. B. eine abrupte Erhöhung 107 (z. B. Poller, Trümmer, Treibgut etc.) und eine abrupte Vertiefung 108 (z. B. Löcher, freiliegende Kanalschächte etc.) umfassen. Die Hindernisse 107, 108 stellen für das Kraftfahrzeug 101 potentielle, aber für den Fahrzeugführer meist nicht erkennbare Gefahrenquellen dar.

Deshalb umfasst das Kraftfahrzeug 101 eine Erfassungsvorrichtung 102, insbesondere eine Abtastvorrichtung zum Abtasten der die Hindernisse 107 und 108 aufweisenden Fahrbahntopografie 106.

Die Erfassungsvorrichtung 102 umfasst beispielhaft drei nebeneinander angeordnete und sich im Wesentlichen parallel zueinander erstreckende Halterungskonstruktion 103 zur Montage an die Fahrzeugfront des Kraftfahrzeugs 101.

Jede der Halterungskonstruktionen 103 umfasst ein Erfassungselement 401 zum Erfassen der in Fahrtrichtung 105 vor dem Kraftfahrzeug 101 unter der Wasseroberfläche 304 liegenden Fahrbahntopografie 106, 107, 108, so dass mittels der Erfassungselemente 401 insbesondere die Hindernisse 107 und 108, alternativ oder ergänzend aber auch die Wassertiefe 301 erfasst werden können.

Die Erfassungselemente 401 sind im Wesentlichen am distalen Ende der Halterungskonstruktionen 103 angeordnet und als drehbares Sternrad mit drei Abtastarmen und drei Abtasträdern W ausgebildet. Die drei Abtastarme und die drei Abtasträder W sind um eine zentrale Drehachse A drehbar. Das als Sternrad 401 ausgebildete Erfassungselement kann auch als Abtastrevolver bezeichnet werden.

Die Erfassungselemente 401 sind ausgebildet, um auf der Fahrbahntopografie 106, 107 und 108 (kontaktbasiert) abzurollen und insbesondere über die Hindernisse 107 und 108 (kontaktbasiert) abzurollen, insbesondere um die Hindernisse 107 und 108 zu überklettern.

Das Erfassen der die Hindernisse 107 und 108 umfassenden Fahrbahntopografie 106 erfolgt somit insbesondere durch direkten Bodenkontakt.

Die Erfassungsvorrichtung 102 dient insbesondere zum Erfassen einer bis z. B. maximal ungefähr4m oder maximal ungefähr 3m vor dem Kraftfahrzeug 101 liegenden Fahrbahntopografie 106, 107, 108.

Das Kraftfahrzeug 101 umfasst zwei lenkbare Vorderräder, wobei jeweils eine Halterungskonstruktion 103 im Wesentlichen im direkten Vorlauf jeweils eines Vorderrads angeordnet ist und eine weitere Halterungskonstruktion 103 dort dazwischen angeordnet ist.

Die Halterungskonstruktionen 103 und/oder die Erfassungselemente 401 können lenkbar ausgeführt sein, insbesondere um mit den lenkbaren Vorderrädern des Kraftfahrzeugs 101 abgestimmt mitlenken zu können. Dadurch kann ein Verschleiß der Erfassungselemente 401 reduziert und die Manövrierbarkeit des Kraftfahrzeugs 101 samt Erfassungsvorrichtung 102 verbessert werden. Eine mögliche Realisierung für die Lenkbarkeit ist z.B. eine drehbare Lagerung der Erfassungselemente 102 im Wesentlichen senkrecht zu den zentralen Drehachsen A.

Die als Sternräder ausgeführten Erfassungselemente 401 sind insbesondere so ausgeführt, dass sie in einen durch einen weggeschwemmten Gullideckel offenliegenden Kanalschacht abtauchen können, aber darin nicht komplett verschwinden, insbesondere nicht darin abstürzen.

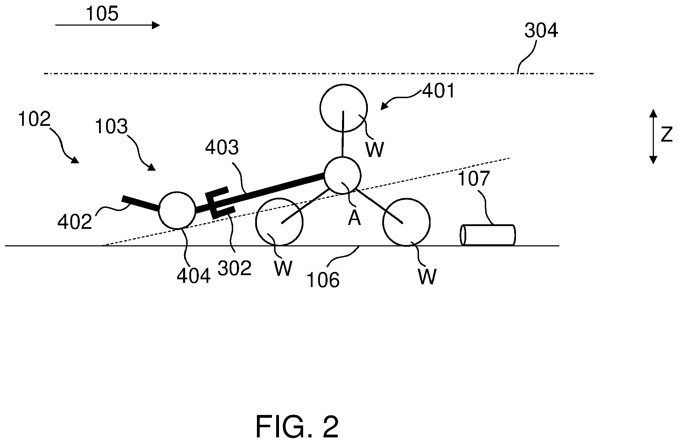

Figur 2 zeigt eine schematische Darstellung einer Erfassungsvorrichtung 102 gemäß einer anderen Ausführungsform der Erfindung.

Die Halterungskonstruktion 103 umfasst ein erstes Tragelement 402 und ein zweites Tragelement 403, die eine Bügel- oder Gestängekonstruktion bilden und mittels eines Drehgelenks 404 miteinander verbunden sind. Das zweite Tragelement 403 erstreckt sich in Richtung des Erfassungselements 401 schräg nach oben. Dadurch kann ein Auslenken des zweiten Tragelements 403 in Abhängigkeit der Fahrbahntopografie 106, 107, 108 ermöglicht werden, vorzugsweise ein Auslenken im Wesentlichen in Auf- und Abwärtsrichtung Z. Somit können die Erfassungselemente 401 insbesondere Erhebungen 107 erleichtert überrollen (insbesondere erleichtert überklettern). Die zentrale Drehachse A des Erfassungselements 401 ist vorzugsweise auf einem höheren Niveau angeordnet als das Drehgelenk 404.

Die Halterungskonstruktion 103 weist einen Dämpfer 302 zum Reduzieren eines Erfassungsimpulses (z. B. eines Stoßes) auf, so dass der Erfassungsimpuls beim Erfassen eines Hindernisses 107 und 108 reduziert werden kann, was z. B. bei Kollisionen mit relativ großen Hindernissen 107 und 108 vorteilhaft sein kann.

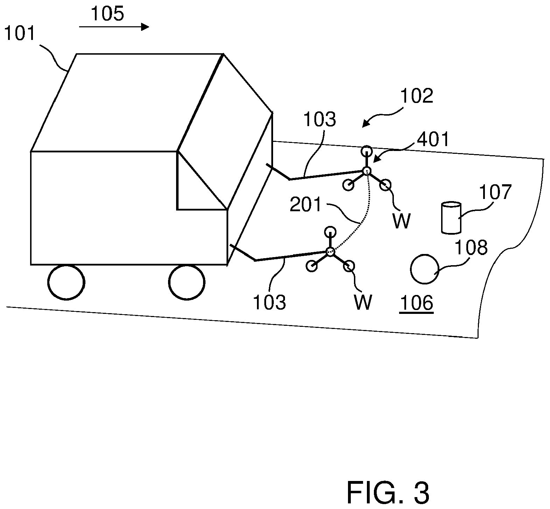

Figur 3 zeigt eine schematische Darstellung eines Kraftfahrzeugs 101 mit einer Erfassungsvorrichtung 102.

Eine Besonderheit der in Figur 3 gezeigten Erfassungsvorrichtung 102 ist, dass sich zwischen zwei außenliegenden Halterungskonstruktionen 103 ein Fangelement 201 erstreckt.

Das Fangelement 201 dient als zusätzliches Erfassungselement zum Erfassen von Erhebungen 107 zwischen den zwei außenliegenden Halterungskonstruktionen 103. Das Fangelement 201 ist nachgiebig oder flexibel ausgebildet und kann z. B. eine Fangkette, eine Fangleine, ein Fangband etc. sein. Es kann alternativ oder ergänzend nachgiebig oder flexibel montiert sein.

Das Fangelement 201 erstreckt sich im Wesentlichen quer zu den zwei Halterungskonstruktionen 103 und verbindet die zwei Halterungskonstruktionen 103 miteinander, um so auch den Raum zwischen den zwei Halterungskonstruktionen 103 erfassen zu können.

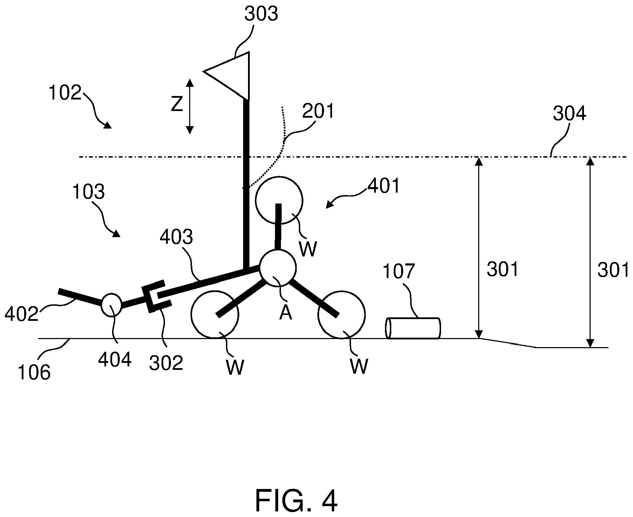

Figur 4 zeigt eine schematische Darstellung einer Erfassungsvorrichtung 102 gemäß einer anderen Ausführungsform der Erfindung

Eine Besonderheit der in Figur 4 gezeigten Erfassungsvorrichtung 102 ist, dass die Halterungskonstruktion 103 mit einer für einen Fahrzeugführer des Kraftfahrzeugs 101 optisch erkennbaren mechanischen Anzeigestruktur 303 ausgestattet ist.

Die Anzeigestruktur 303 ist vorzugsweise an das zweite Tragelement 403 montiert und ausgebildet, um aus der Wasseroberfläche 304 herauszuragen und um in Abhängigkeit der erfassten Fahrbahntopografie 106, 107, 108 bewegt zu werden, so dass der Fahrzeugführer mittels der Bewegungen der Anzeigestruktur 303 Informationen über die für ihn direkt nicht sichtbare Fahrbahntopografie 106, 107 und 108 unter der Wasseroberfläche 304 erhält. Die Anzeigestruktur 303 kann z. B. eine bei ebener Fahrbahntopografie 106 im Wesentlichen vertikale flexible Stange mit z. B. einer Fahne etc. umfassen.

Es ist möglich, dass das Fangelement 201 zweckmäßig mit der Anzeigestruktur 303 verbunden ist (z. B. an deren Stangen montiert ist), so dass die Anzeigestruktur 303 auch z. B. einwärts und/oder rückwärts bewegt wird, wenn das Fangelement 201 eine Erhebung 107 erfasst.

Die Anzeigestruktur 303 kann zudem als Anzeige für die Wassertiefe 301 dienen.

Ein abruptes Absinken mehrerer Halterungskonstruktionen 103 und somit mehrerer Anzeigestrukturen 303 ist ein Hinweis auf eine relativ große abrupte Vertiefung 108. Ein abruptes Absinken z. B. nur einer einzigen Halterungskonstruktion 103 und somit nur einer einzigen Anzeigestruktur 303 ist ein Hinweis auf eine relativ kleine Vertiefung 108 (z. B. ein offenliegender Kanalschacht etc.).

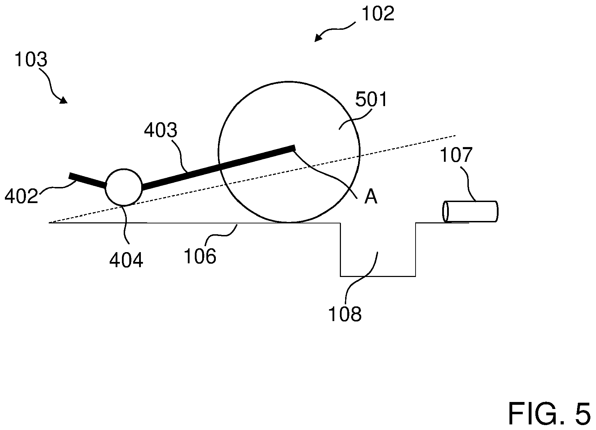

Figur 5 zeigt eine schematische Darstellung einer Erfassungsvorrichtung 102 gemäß einer anderen Ausführungsform der Erfindung.

Eine Besonderheit ist, dass das Erfassungselement als um eine zentrale Drehachse A drehbares Abtastrad 501 ausgeführt ist. Der Außenumfang des als Abtastrad 501 ausgebildeten Erfassungselements sollte vorzugsweise maximal im Wesentlichen dem Außenumfang der Vorderräder des Kraftfahrzeugs 101 entsprechen.

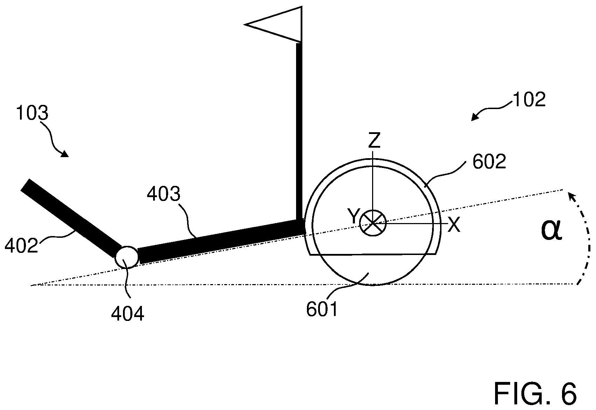

Figur 6 zeigt eine schematische Darstellung einer Erfassungsvorrichtung 102 gemäß einer anderen Ausführungsform der Erfindung.

Eine Besonderheit ist, dass das Erfassungselement als eine insbesondere frei drehbare Abtastkugel 601 ausgeführt ist. Die Abtastkugel 601 ist abschnittsweise in einem Kugelkäfig 602 untergebracht und zweckmäßig darin gelagert.

Die drehbare Abtastkugel 601 kann insbesondere in der Ebene X, Y frei abrollen und ist um alle drei Raumachsen X, Y, Z frei drehbar, so dass sie z. B. bei Kurvenfahrten im Wesentlichen keine Querkräfte aufbaut, weil sie inhärent mit dem Kraftfahrzeug 101 mitlenkend ist.

Es ist darauf zu achten, dass die Auflagefläche der Abtastkugel 601 kleiner oder im Wesentlichen gleich der Auflagefläche der Reifen der Vorderräder des Kraftfahrzeugs 101 ist.

Die unter Bezugnahme auf die Figuren 1 bis 6 beschriebene Erfassungsvorrichtung 102 kann eine insbesondere elektronische Erfassungssensorik (z. B. einen oder mehrere Sensoren) aufweisen.

Die Erfassungssensorik kann ausgebildet sein, um die mittels der Erfassungselemente 401, 501 und 601 erfasste Fahrbahntopografie 106, 107, 108 und/oder die mittels des Fangelements 201 erfassten Erhebungen 107 elektronisch und somit automatisch zu erfassen und vorzugsweise in Form eines Datenpakets an eine Steuereinrichtung zu übermitteln. Hierzu können z. B. eine oder mehrere Sensoren in die Halterungskonstruktionen 103 integriert oder in oder an den Dämpfer 303 angebracht werden.

Dadurch kann z. B. ermöglicht werden, dass das Kraftfahrzeug 101 in Abhängigkeit des Datenpakets gesteuert wird, insbesondere abgebremst wird.

Auch kann dadurch ermöglicht werden, dass das Datenpaket z. B. an andere Kraftfahrzeuge übermittelt werden kann. Informationen über Gefahrenstellen können somit mit anderen Kraftfahrzeugen geteilt werden.

Dadurch kann des Weiteren ermöglicht werden, dass in Abhängigkeit des Datenpakets eine akustische (z. B. Warnton), haptische (z. B. Lenkradvibration) und/oder optische Warnmeldung (z. B. Signallicht) für den Fahrzeugführer erzeugt wird. Hierzu können z. B. die Bewegungen der Anzeigestruktur 303, insbesondere Bewegungen der Stange aus einer im Wesentlichen vertikalen Ausrichtung erfasst und zweckmäßig ausgewertet werden.

Die Erfassungsvorrichtung 102 kann auch zur Kartierung von unter einer Wasseroberfläche 304 liegenden Fahrbahntopografie 106 genutzt werden. Dazu kann z. B. ein Drehwinkelsensor in einen oder mehrere Halterungskonstruktionen 103 integriert werden.

Die Erfindung ist nicht auf die oben beschriebenen bevorzugten Ausführungsformen beschränkt. Vielmehr ist eine Vielzahl von Varianten und Abwandlungen möglich, die in den durch die nachfolgenden Ansprüche definierten Schutzbereich fallen.

### Bezugszeichenliste

- 101: Kraftfahrzeug, z. B. Einsatz- oder Nutzfahrzeug
- 102: Erfassungsvorrichtung, vorzugsweise Abtastvorrichtung
- 103: Halterungskonstruktion
- 105: Fahrtrichtung des Kraftfahrzeugs
- 106: Fahrbahntopografie
- 107: Hindernis, insbesondere Erhebung
- 108: Hindernis, insbesondere Vertiefung
- 201: Fangelement, vorzugsweise zusätzliches Erfassungselement
- 301: Wassertiefe
- 302: Dämpfer
- 303: Anzeigestruktur
- 304: Wasseroberfläche
- 401: Erfassungselement, insbesondere Sternrad
- 501: Erfassungselement, insbesondere Abtastrad
- 601: Erfassungselement, insbesondere Abtastkugel
- 602: Kugelkäfig
- 402: erstes Tragelement
- 403: zweites Tragelement
- 404: Drehgelenk
- A: Drehachse, insbesondere zentrale Drehachse
- W: Abtasträder
- X: Raumachse
- Y: Raumachse
- Z: Raumachse, Auf- und Abwärtsrichtung

## Patentansprüche

1. Erfassungsvorrichtung (102) zum Anordnen an ein Kraftfahrzeug (101), vorzugsweise zum Anordnen an eine Kraftfahrzeugfront des Kraftfahrzeugs (101), mit zumindest einer Halterungskonstruktion (103) zur Montage an das Kraftfahrzeug (101), wobei die zumindest eine Halterungskonstruktion (103) zumindest ein Erfassungselement (401, 501, 601) aufweist zum Erfassen einer in Fahrtrichtung (105) vor dem Kraftfahrzeug (101) unter einer Wasseroberfläche (304) liegenden Fahrbahntopografie (106, 107, 108), um Hindernisse (107, 108) und/oder eine Wassertiefe (301) zu erfassen, **dadurch gekennzeichnet, dass**
a) das zumindest eine Erfassungselement (401, 501, 601) ein Abtastrad umfasst, vorzugsweise
- ein drehbares Sternrad (401), oder
- ein drehbares Erfassungsrad (501), und/oder
b) das zumindest eine Erfassungselement (401, 501, 601) eine drehbare Abtastkugel (601) umfasst und vorzugsweise die Abtastkugel (601) abschnittsweise in einem Kugelgehäuse (602) untergebracht ist.

2. Erfassungsvorrichtung (102) nach Anspruch 1, **dadurch gekennzeichnet, dass** das zumindest eine Erfassungselement (401, 501, 601) ausgebildet ist, um auf der Fahrbahntopografie (106, 107, 108) abzurollen und/oder um über die Hindernisse (107, 108) abzurollen.

3. Erfassungsvorrichtung (102) nach einem der vorstehenden Ansprüche, **dadurch gekennzeichnet, dass** die Fahrbahntopografie (106) Erhebungen (107) und/oder Vertiefungen (108) umfassende Hindernisse (107, 108) aufweist.

4. Erfassungsvorrichtung (102) nach einem der vorstehenden Ansprüche, **dadurch gekennzeichnet, dass** das Sternrad (401) zumindest drei Abtasträder (W) und/oder zumindest drei Abtastarme umfasst.

5. Erfassungsvorrichtung (102) nach einem der vorstehenden Ansprüche, **dadurch gekennzeichnet, dass** die Abtastkugel (601) frei drehbar ist, in einer Ebene (X, Y) frei abrollbar ist und/oder um alle drei Raumachsen (X, Y, Z) frei abrollbar ist, vorzugsweise um beim Kurvenfahren im Wesentlichen keine Querkräfte aufzubauen.

6. Erfassungsvorrichtung (102) nach einem der vorstehenden Ansprüche, **dadurch gekennzeichnet, dass** die zumindest eine Halterungskonstruktion (103) zumindest einen Dämpfer (302) zum Reduzieren eines Erfassungsimpulses umfasst, insbesondere beim Erfassen eines Hindernisses (107, 108).

7. Erfassungsvorrichtung (102) nach einem der vorstehenden Ansprüche, **dadurch gekennzeichnet, dass** das zumindest eine Erfassungselement (401, 501, 601) am distalen Ende der zumindest einen Halterungskonstruktion (103) angeordnet ist.

8. Erfassungsvorrichtung (102) nach einem der vorstehenden Ansprüche, **dadurch gekennzeichnet, dass** die zumindest eine Halterungskonstruktion (103) ein erstes Tragelement (402) und ein zweites Tragelement (403) aufweist, die mittels eines Drehgelenks (404) miteinander verbunden sind, um ein Auslenken des zweiten Tragelements (403) in Abhängigkeit der Fahrbahntopografie (106, 107, 108) zu ermöglichen, vorzugsweise um ein Auslenken im Wesentlichen in Auf- und Abwärtsrichtung (Z) zu ermöglichen.

9. Erfassungsvorrichtung (102) nach Anspruch 8, **dadurch gekennzeichnet, dass** das zweite Tragelement (403) sich in Richtung des zumindest einen Erfassungselements (401, 501, 601) nach oben erstreckt und/oder eine zentrale Drehachse (A) des zumindest einen Erfassungselements (401, 501, 601) auf einem höheren Niveau angeordnet ist als das Drehgelenk (404).

10. Erfassungsvorrichtung (102) nach einem der vorstehenden Ansprüche, **dadurch gekennzeichnet, dass** die zumindest eine Halterungskonstruktion (103) und/oder das zumindest eine Erfassungselement (401, 501, 601) lenkbar ist, vorzugsweise um zusammen mit dem Kraftfahrzeug (1) lenkbar zu sein.

11. Erfassungsvorrichtung (102) nach einem der vorstehenden Ansprüche, **dadurch gekennzeichnet, dass** die Erfassungsvorrichtung (102) zumindest zwei Halterungskonstruktionen (103) aufweist, die nebeneinander angeordnet sind und/oder sich parallel zueinander erstrecken.

12. Erfassungsvorrichtung (102) nach Anspruch 11, **dadurch gekennzeichnet, dass** die Erfassungsvorrichtung (102) zumindest ein Fangelement (201) zum Erfassen von Erhebungen (107) umfassenden Hindernissen zwischen den zumindest zwei Halterungskonstruktionen (103) aufweist und vorzugsweise das Fangelement (201)
- die zumindest zwei Halterungskonstruktionen (103) miteinander verbindet,
- sich im Wesentlichen quer zu den zumindest zwei Halterungskonstruktionen (103) erstreckt, und/oder
- nachgiebig oder flexibel ausgebildet ist.

13. Erfassungsvorrichtung (102) nach einem der vorstehenden Ansprüche, **dadurch gekennzeichnet, dass** die zumindest eine Halterungskonstruktion (103) mit zumindest einer für einen Fahrzeugführer des Kraftfahrzeugs (101) optisch erkennbaren Anzeigestruktur (303) ausgestattet ist und die Anzeigestruktur (303) in Abhängigkeit der erfassten Fahrbahntopografie (106, 107, 108) bewegt wird und vorzugsweise die Anzeigestruktur (303) zum Herausragen aus der Wasseroberfläche (304) ausgeführt ist.

14. Erfassungsvorrichtung (102) nach einem der vorstehenden Ansprüche, **dadurch gekennzeichnet, dass** die Erfassungsvorrichtung (102) eine Erfassungssensorik umfasst, um die durch das zumindest eine Erfassungselement (401, 501, 601) erfasste Fahrbahntopografie (106, 107, 108) und/oder die durch das Fangelement (201) erfassten Erhebungen (107) elektronisch zu erfassen und/oder in Form eines Datenpakets an eine Steuereinrichtung zu übermitteln.

15. Erfassungsvorrichtung (102) nach Anspruch 14, **dadurch gekennzeichnet, dass** die Steuereinrichtung ausgebildet ist,
- um das Kraftfahrzeug (101) in Abhängigkeit des Datenpakets zu steuern, insbesondere abzubremsen,
- um das Datenpaket an andere Kraftfahrzeuge zu übermitteln, und/oder
- um in Abhängigkeit des Datenpakets eine akustische, haptische und/oder optische Warnmeldung für den Fahrzeugführer zu erzeugen.

16. Kraftfahrzeug (101), vorzugsweise Nutz- oder Einsatzfahrzeug, mit einer Erfassungsvorrichtung (102) nach einem der vorstehenden Ansprüche.

17. Kraftfahrzeug (101) nach Anspruch 16, **dadurch gekennzeichnet, dass** das Kraftfahrzeug (101) zumindest zwei Vorderräder umfasst und jeweils eine Halterungskonstruktion (103) im Wesentlichen in direktem Vorlauf jeweils eines Vorderrads angeordnet ist und vorzugsweise zumindest eine weitere Halterungskonstruktion (103) dazwischen angeordnet ist.

18. Kraftfahrzeug (101) nach einem der Ansprüche 16 oder 17, **dadurch gekennzeichnet, dass** das Kraftfahrzeug (101) ein Display umfasst, um die erfasste Fahrbahntopografie (106, 107, 108) anzuzeigen.

## Claims

1. A capture apparatus (102) to be arranged on a motor vehicle (101), preferably to be arranged on a motor vehicle front of the motor vehicle (101), having at least one holding structure (103) for mounting on the motor vehicle (101), wherein the at least one holding structure (103) has at least one capture element (401, 501, 601) for capturing a roadway topography (106, 107, 108) located in front of the motor vehicle (101) in the travel direction (105) and below a water surface (304), to capture obstacles (107, 108) and/or a water depth (301), **characterized in that**
a) the at least one capture element (401, 501, 601) comprises a scanning wheel, preferably
- a rotatable star wheel (401), or
- a rotatable capture wheel (501), and/or
b) the at least one capture element (401, 501, 601) comprises a rotatable scanning sphere (601) and preferably the scanning sphere (601) is housed in sections in a sphere housing (602).

2. The capture apparatus (102) as claimed in claim 1, **characterized in that** the at least one capture element (401, 501, 601) is designed to roll on the roadway topography (106, 107, 108) and/or to roll over the obstacles (107, 108).

3. The capture apparatus (102) as claimed in any one of the preceding claims, **characterized in that** the roadway topography (106) has obstacles (107, 108) comprising elevations (107) and/or depressions (108).

4. The capture apparatus (102) as claimed in any one of the preceding claims, **characterized in that** the star wheel (401) comprises at least three scanning wheels (W) and/or at least three scanning arms.

5. The capture apparatus (102) as claimed in any one of the preceding claims, **characterized in that** the scanning sphere (601) is freely rotatable, can roll freely in a plane (X, Y), and/or can roll freely around all three spatial axes (X, Y, Z), preferably in order to build up essentially no lateral forces when cornering.

6. The capture apparatus (102) as claimed in any one of the preceding claims, **characterized in that** the at least one holding structure (103) comprises at least one damper (302) for reducing a capture momentum, in particular when capturing an obstacle (107, 108).

7. The capture apparatus (102) as claimed in any one of the preceding claims, **characterized in that** the at least one capture element (401, 501, 601) is arranged at the distal end of the at least one holding structure (103).

8. The capture apparatus (102) as claimed in any one of the preceding claims, **characterized in that** the at least one holding structure (103) has a first support element (402) and a second support element (403), which are connected to one another by means of a pivot joint (404), to enable a deflection of the second support element (403) in dependence on the roadway topography (106, 107, 108), preferably to enable a deflection essentially in the upward and downward direction (Z).

9. The capture apparatus (102) as claimed in claim 8, **characterized in that** the second support element (403) extends upward in the direction of the at least one capture element (401, 501, 601) and/or a central axis of rotation (A) of the at least one capture element (401, 501, 601) is arranged on a higher level than the pivot joint (404).

10. The capture apparatus (102) as claimed in any one of the preceding claims, **characterized in that** the at least one holding structure (103) and/or the at least one capture element (401, 501, 601) is steerable, preferably in order to be steerable together with the motor vehicle (1).

11. The capture apparatus (102) as claimed in any one of the preceding claims, **characterized in that** the capture apparatus (102) has at least two holding structures (103), which are arranged adjacent to one another and/or extend in parallel to one another.

12. The capture apparatus (102) as claimed in claim 11, **characterized in that** the capture apparatus (102) has at least one trap element (201) for capturing obstacles comprising elevations (107) between the at least two holding structures (103) and preferably the trap element (201)
- connects the at least two holding structures (103) to one another,
- extends essentially transversely to the at least two holding structures (103), and/or
- is made yielding or flexible.

13. The capture apparatus (102) as claimed in any one of the preceding claims, **characterized in that** the at least one holding structure (103) is equipped with at least one display structure (303) optically recognizable to a vehicle driver of the motor vehicle (101) and the display structure (303) is moved in dependence on the captured roadway topography (106, 107, 108) and preferably the display structure (303) is designed to protrude out of the water surface (304).

14. The capture apparatus (102) as claimed in any one of the preceding claims, **characterized in that** the capture apparatus (102) comprises a capture sensor system to electronically capture the roadway topography (106, 107, 108) captured by the at least one capture element (401, 501, 601) and/or the elevations (107) captured by the trap element (201) and/or transmit them in the form of a data packet to a control unit.

15. The capture apparatus (102) as claimed in claim 14, **characterized in that** the control unit is designed,
- to control, in particular to brake, the motor vehicle (101) in dependence on the data packet,
- to transmit the data packet to other motor vehicles, and/or
- to generate an acoustic, haptic, and/or optical warning message for the vehicle driver in dependence on the data packet.

16. A motor vehicle (101), preferably a utility vehicle or emergency vehicle, having a capture apparatus (102) as claimed in any one of the preceding claims.

17. The motor vehicle (101) as claimed in claim 16, **characterized in that** the motor vehicle (101) comprises at least two front wheels and one holding structure (103) is arranged in each case essentially directly in the forward motion of each front wheel and preferably at least one further holding structure (103) is arranged in between.

18. The motor vehicle (101) as claimed in one of claims 16 and 17, **characterized in that** the motor vehicle (101) comprises a display to display the captured roadway topography (106, 107, 108).

## Revendications

1. Dispositif de détection (102) destiné à être installé sur un véhicule automobile (101), de préférence destiné à être installé à l'avant d'un véhicule automobile (101), ledit dispositif de détection comprenant au moins une structure de support (103) destinée à être montée sur le véhicule automobile (101),
l'au moins une structure de support (103) comportant au moins un élément de détection (401, 501, 601) destiné à détecter une topographie routière (106, 107, 108) située sous une surface d'eau (304) devant le véhicule automobile (101) dans la direction de déplacement (105), afin de détecter des obstacles (107, 108) et/ou une profondeur d'eau (301), **caractérisé en ce que**
a) l'au moins un élément de détection (401, 501, 601) comprend une roue de balayage, de préférence
- une roue en étoile rotative (401) ou
- une roue de détection rotative (501), et/ou
b) l'au moins un élément de détection (401, 501, 601) comprend une bille de balayage rotative (601) et, de préférence, la bille de balayage (601) est logée par portions dans un boîtier de bille (602).

2. Dispositif de détection (102) selon la revendication 1, **caractérisé en ce que** l'au moins un élément de détection (401, 501, 601) est conçu pour rouler sur la topographie routière (106, 107, 108) et/ou pour franchir les obstacles (107, 108).

3. Dispositif de détection (102) selon l'une des revendications précédentes, **caractérisé en ce que** la topographie routière (106) comporte des obstacles (107, 108) comprenant des élévations (107) et/ou des dépressions (108).

4. Dispositif de détection (102) selon l'une des revendications précédentes, **caractérisé en ce que** la roue en étoile (401) comprend au moins trois roues de balayage (W) et/ou au moins trois bras de balayage.

5. Dispositif de détection (102) selon l'une des revendications précédentes, **caractérisé en ce que** la bille de balayage (601) peut tourner librement et peut rouler librement dans un plan (X, Y) et/ou peut rouler librement sur trois axes spatiaux (X, Y, Z), de préférence afin de ne pas générer de forces transversales dans les virages.

6. Dispositif de détection (102) selon l'une des revendications précédentes, **caractérisé en ce que** l'au moins une structure de support (103) comprend au moins un amortisseur (302) destiné à réduire une impulsion de détection, notamment lors de la détection d'un obstacle (107, 108).

7. Dispositif de détection (102) selon l'une des revendications précédentes, **caractérisé en ce que** l'au moins un élément de détection (401, 501, 601) est disposé à l'extrémité distale de l'au moins une structure de support (103).

8. Dispositif de détection (102) selon l'une des revendications précédentes, **caractérisé en ce que** l'au moins une structure de support (103) comporte un premier élément porteur (402) et un deuxième élément porteur (403) qui sont reliés l'un à l'autre au moyen d'une articulation pivotante (404) afin de permettre une déviation du deuxième élément porteur (403) en fonction de la topographie routière (106, 107, 108), de préférence pour permettre une déviation sensiblement vers le haut et vers le bas (Z).

9. Dispositif de détection (102) selon la revendication 8, **caractérisé en ce que** le deuxième élément porteur (403) s'étend vers le haut en direction de l'au moins un élément de détection (401, 501, 601) et/ou un axe de rotation central (A) de l'au moins un élément de détection (401, 501, 601) est disposé à un niveau plus élevé que l'articulation pivotante (404).

10. Dispositif de détection (102) selon l'une des revendications précédentes, **caractérisé en ce que** l'au moins une structure de support (103) et/ou l'au moins un élément de détection (401, 501,601) sont orientables, de préférence afin de pouvoir être orientés conjointement avec le véhicule automobile (1).

11. Dispositif de détection (102) selon l'une des revendications précédentes, **caractérisé en ce que** le dispositif de détection (102) comporte au moins deux structures de support (103) qui sont disposées l'une à côté de l'autre et/ou qui s'étendent parallèlement l'une à l'autre.

12. Dispositif de détection (102) selon la revendication 11, **caractérisé en ce que** le dispositif de détection (102) comporte au moins un élément de capture (201) destiné à détecter des obstacles, comprenant des élévations (107), entre les au moins deux structures de support (103) et de préférence l'élément de capture (201)
- qui relie au moins deux structures de support (103) l'une à l'autre,
- s'étend sensiblement transversalement aux au moins deux structures de support (103), et/ou
- est conçu pour être élastique ou flexible.

13. Dispositif de détection (102) selon l'une des revendications précédentes, **caractérisé en ce que** l'au moins une structure de support (103) est équipée d'au moins une structure d'affichage (303) optiquement reconnaissable par un conducteur du véhicule automobile (101) et la structure d'affichage (303) est déplacée en fonction de la topographie routière détectée (106, 107, 108) et de préférence la structure d'affichage (303) est conçue pour faire saillie de la surface d'eau (304).

14. Dispositif de détection (102) selon l'une des revendications précédentes, **caractérisé en ce que** le dispositif de détection (102) comprend un système de détection afin de détecter la topographie routière (106, 107, 108), qui est détectée par l'au moins un élément de détection (401, 501, 601) et/ou afin de détecter électroniquement les élévations (107) détectées par l'élément de capture (201) et/ou afin de les transmettre à un module de commande sous la forme d'un paquet de données.

15. Dispositif de détection (102) selon la revendication 14, **caractérisé en ce que** le module de commande est conçu
- pour commander, notamment freiner, le véhicule automobile (101) en fonction du paquet de données,
- pour transmettre le paquet de données à d'autres véhicules automobiles, et/ou
- pour générer un message d'avertissement acoustique, haptique et/ou optique à destination du conducteur de véhicule en fonction du paquet de données.

16. Véhicule automobile (101), de préférence véhicule utilitaire ou de secours, comprenant un dispositif de détection (102) selon l'une des revendications précédentes.

17. Véhicule automobile (101) selon la revendication 16, **caractérisé en ce que** le véhicule automobile (101) comprend au moins deux roues avant et, pour chacune d'elles, une structure de support (103) est disposée sensiblement directement en avant de chaque roue avant et de préférence au moins une autre structure de support (103) est disposée entre les deux.

18. Véhicule automobile (101) selon l'une des revendications 16 ou 17, **caractérisé en ce que** le véhicule automobile (101) comprend un afficheur destiné à afficher la topographie routière détectée (106, 107, 108) .
